# EUROPEAN PATENT APPLICATION

(11) **EP 4 819 445 A1**
(43) Date of publication of application: **07.10.2026**
(21) Application number: 24895911.6
(22) Date of filing: 13.09.2024
(51) Int. Cl.: H02K 1/16, H02K 3/28, H02K 7/10

(54) **ELECTRIC MOTOR STATOR, ELECTRIC MOTOR, DRIVING ASSEMBLY AND VEHICLE**

(30) Priority: 29.11.2023 CN 202311622233
(71) Applicant: BYD Company Limited, Shenzhen, Guangdong 518118 (CN)
(72) Inventor: YANG, Wei, Shenzhen, Guangdong 518118 (CN); YOU, Bin, Shenzhen, Guangdong 518118 (CN)
(74) Representative: Mathys & Squire
(86) International application number: PCT/CN2024/118687
(87) International publication number: WO 2025/112813

(57) **Abstract**

The present disclosure relates to a motor stator, a motor, a drive assembly, and a vehicle. The motor stator includes a stator core and three phase windings. The stator core includes a plurality of stator slots evenly distributed in a circumferential direction, and every three adjacent stator slots form one stator slot group; a plurality of wire slots are arranged in each stator slot in a radial direction of the stator core; the three phase windings are sequentially and alternately wound in different stator slot groups in a circumferential direction of the stator core, and the three phase windings are further sequentially wound in wire slot layers; and each phase winding of the three phase windings includes two branches, each branch is wound in stator slots of a plurality of stator slot groups spaced apart from each other, and the same branch in two stator slot groups that are centrally symmetrical has the same winding configuration.

## Description

The present disclosure claims priority to Chinese Patent Application No. 202311622233.0, filed with the China National Intellectual Property Administration on November 29, 2023 and entitled "MOTOR STATOR, MOTOR, DRIVE ASSEMBLY, AND VEHICLE", which is incorporated herein by reference in its entirety.

### TECHNICAL FIELD

The present disclosure relates to the field of motors, and in particular, to a motor stator, a motor including the motor stator, a drive assembly including the motor, and a vehicle including the motor.

### BACKGROUND

A flat-wire winding in a motor stator has a higher motor slot fill factor than a round-wire winding, and the flat-wire winding can reduce copper loss of the motor, and improve operating efficiency of the motor. Therefore, motors with flat-wire windings are developing rapidly in fields such as new energy vehicles. To improve wire winding efficiency, a plurality of types of U-shaped wires are generally manufactured. By combining the plurality of types of U-shaped wires, wire winding of each branch in the flat-wire winding is implemented.

However, in conventional technologies, U-shaped wires of each parallel branch are distributed at different positions of an inner diameter of a stator slot, and the U-shaped wires are provided in a plurality of types in order to match a wire winding direction, resulting in a relatively complex branch structure. This leads to generation of current circulation in the branch, affecting reliable operation of the motor stator.

### SUMMARY

In view of shortcomings of the foregoing conventional technologies, an objective of the present disclosure is to provide a motor stator for improving operational reliability, a motor including the motor stator, a drive assembly including the motor, and a vehicle including the motor. Specifically, the following technical solutions are included.

According to a first aspect, an embodiment of the present disclosure provides a motor stator, including:
a stator core, the stator core being cylindrical, and the stator core including:
an inner wall, a plurality of stator slots being distributed in a circumferential direction of the inner wall, every three adjacent stator slots forming one stator slot group, one stator slot corresponding to one stator slot group, a plurality of wire slots being arranged in each stator slot in a radial direction of the stator core, and wire slots with the same radius dimension in each stator slot being disposed in the same wire slot layer; and
three phase windings, the three phase windings being sequentially and alternately wound in different stator slot groups in a circumferential direction of the stator core, the three phase windings being further sequentially wound in wire slot layers, each phase winding of the three phase windings including two branches, each branch being wound in stator slots of a plurality of stator slot groups spaced apart from each other, and the same branch in two stator slot groups that are centrally symmetrical having the same winding configuration.

In the motor stator of the present disclosure, by evenly distributing the plurality of stator slots in the circumferential direction on the inner wall of the stator core, the three phase windings can be sequentially and alternately wound in different stator slot groups in the circumferential direction of the stator core. Then, by providing the plurality of wire slots arranged in the stator slot, and making wire slots with the same radius dimension in each stator slot be disposed in the same wire slot layer, the three phase windings can further be wound in sequence between the wire slot layers, thereby improving a copper fill factor of the stator core.

In the motor stator of the present disclosure, by winding each branch of each phase winding in the plurality of stator slot groups spaced apart from each other, and making two centrally symmetrical stator slot groups in which the same branch is wound have the same winding configuration, a symmetry of the branch is ensured, thereby avoiding a loop current generated by the branch due to asymmetry. This, in turn, improves operational reliability of the motor stator in the present disclosure.

In an embodiment, the two branches each have a wire inlet end, and the wire inlet ends of the two branches are located in two spaced stator slots of the same stator slot group and are located on the same wire slot layer, wherein the wire inlet ends of the two branches are spaced apart by one stator slot; and/or the two branches each have a wire outlet end, and the wire outlet ends of the two branches are located in two spaced stator slots of another stator slot group and are located in the same wire slot layer, wherein the wire outlet ends of the two branches are spaced apart by one stator slot.

In this embodiment, by disposing the wire inlet ends of the two branches in two spaced stator slots of the same stator slot group, and making the two wire inlet ends be located on the same wire slot layer, a spacing between the wire inlet ends of the two branches is reduced while it is ensured that wire winding of the two branches is symmetrical, thereby facilitating implementation of parallel connection between the two branches.

In addition, by disposing the wire outlet ends of the two branches in two spaced stator slots of the same stator slot group, and making the two wire outlet ends be located on the same wire slot layer, a spacing between the wire outlet ends of the two branches is reduced while it is ensured that wire winding of the two branches is symmetrical, thereby facilitating implementation of parallel connection between the two branches.

In an embodiment, a wire inlet end and a wire outlet end of each branch are located on two adjacent wire slot layers, and a radius dimension of the wire slot layer in which the wire inlet end of the branch is located is greater than a radius dimension of the wire slot layer in which the wire outlet end of the branch is located.

In this embodiment, by disposing the wire inlet end of the branch on a wire slot layer with a relatively large radius dimension, and disposing the wire outlet end of the branch on a wire slot layer with a relatively small radius dimension, wire winding can be performed sequentially from an inside to an outside of the stator slot in a radius direction of the stator core when wire winding is performed on the branch, thereby simplifying a wire winding process of the branch and improving wire winding quality.

In an embodiment, the branch includes a plurality of U-shaped wires sequentially connected in series, each U-shaped wire including a bent end, a welded end being formed between two adjacent U-shaped wires, and the bent end and the welded end alternately spanning between stator slot groups and alternately spanning between wire slot layers, wherein a span of the bent end spanning between two adjacent wire slot layers is a full pitch; and a span of the welded end spanning between two adjacent wire slot layers is a full pitch.

In this embodiment, by providing the plurality of U-shaped wires sequentially connected in series, making the bent end and the welded end alternately span between stator slot groups and between wire slot layers, and making a span between two connected wire slot layers be a full pitch, wire winding switching between different slot layers of the same phase band in different stator slot groups can be implemented in a procedure of spanning in the radial direction of the stator core using U-shaped wires, thereby simplifying a wire winding process of the branch.

In an embodiment, a wire inlet end and a wire outlet end of the same branch are located in two adjacent stator slot groups, and a span between two stator slots corresponding to the wire inlet end and the wire outlet end of the branch is a full pitch.

In this embodiment, by disposing the wire inlet end and the wire outlet end of the same branch in two adjacent stator slot groups, a short circuit of the branch caused by mutual contact between the wire inlet end and the wire outlet end is avoided. In addition, by setting the span between two stator slots corresponding to the wire inlet end and the wire outlet end to a full pitch, a wire winding configuration of the branch forms a cycle, thereby ensuring wire winding quality of the branch.

In an embodiment, the wire slot layer includes:
a slot bottom layer, a radius dimension of the slot bottom layer being greater than a radius dimension of any other wire slot layer; and
a slot opening layer, a radius dimension of the slot opening layer being less than a radius dimension of any other wire slot layer, wherein
the two branches of a same-phase winding include a first branch and a second branch, a span of the first branch at the bent end of the slot bottom layer is n and n+2, and a span of the first branch at the bent end of the slot opening layer is n-2 and n-1; and a span of the second branch at the bent end of the slot bottom layer is n-2 and n, and a span of the second branch at the bent end of the slot opening layer is n+1 and n+2, wherein the full pitch is n.

In this embodiment, by setting the span of the first branch at the bent end of the slot bottom layer to n and n+2, and setting the span of the first branch at the bent end of the slot opening layer to n-2 and n-1, wire winding switching between different phase bands that are of the same wire slot layer and that are located in different stator slot groups is implemented, thereby eliminating an angle difference of the first branch and avoiding circulation interference formed between the two branches.

In an embodiment, a wire inlet end of each branch is located on the slot bottom layer, and a wire outlet end of each branch is located on the wire slot layer adjacent to the slot bottom layer.

In this embodiment, when wire winding is performed on a single branch, the wire winding can begin from a slot bottom of the stator slot in the radius direction of the stator core and extend outwards from the wire slot layer close to a slot opening. Therefore, parallel connection between the two branches is simplified, a wire winding process of each branch is also simplified, and wire winding quality is improved.

In addition, by setting the span of the second branch at the bent end of the slot bottom layer to n-2 and n, and setting the span of the second branch at the bent end of the slot opening layer to n+1 and n+2, wire winding switching between different phase bands that are of the same wire slot layer and that are located in different stator slot groups is implemented, thereby eliminating an angle difference of the second branch and avoiding circulation interference formed between the two branches.

In an embodiment, a wire inlet end and a wire outlet end of each branch of each phase winding are located on the same side of the stator core, so as to implement electrical connection between phase windings.

In this embodiment, by disposing the wire inlet end and the wire outlet end of each branch of each phase winding on the same side of the stator core, an electrical connection configuration between phase windings is simplified.

In an embodiment, wire inlet ends of two branches of a same-phase winding are electrically connected, and wire outlet ends of branches of the three phase windings are electrically connected to each other.

In this embodiment, by electrically connecting the wire outlet ends of the three phase windings to each other, the motor stator in the present disclosure uses a star connection configuration.

In an embodiment, wire inlet ends of two branches of a same-phase winding are electrically connected to wire outlet ends of two branches of another phase winding after being electrically connected to each other.

In this embodiment, by electrically connecting the two wire inlet ends of the same-phase winding to the two wire outlet ends of another phase winding after being electrically connected to each other, the motor stator in the present disclosure uses a delta connection configuration.

According to a second aspect, an embodiment of the present disclosure provides a motor, including:
a motor rotor; and
the motor stator according to the first aspect, the motor rotor being located on an inner side of the motor stator.

According to a third aspect, an embodiment of the present disclosure provides a drive assembly, including:
a speed reducer; and
the motor according to the second aspect, the motor being in transmission connection with the speed reducer.

According to a fourth aspect, an embodiment of the present disclosure provides a vehicle, including:
a wheel; and
the drive assembly according to the third aspect, the motor of the drive assembly being in transmission connection with the wheel through the speed reducer of the drive assembly for driving the wheel to rotate to control operation of the vehicle.

It will be understood that the motor, the drive assembly, and the vehicle that are provided in the second aspect to the fourth aspect of the present disclosure all have an effect of improving operational reliability because the motor, the drive assembly, and the vehicle all adopt the motor stator provided in the first aspect of the present disclosure.

### BRIEF DESCRIPTION OF DRAWINGS

FIG. 1 is a schematic diagram of a structure of a motor according to an embodiment of the present disclosure;
FIG. 2 is a schematic diagram of a structure of a motor stator according to an embodiment of the present disclosure;
FIG. 3 is a schematic diagram of a structure of a stator core according to an embodiment of the present disclosure;
FIG. 4 is a schematic diagram of a partial structure of a stator core according to an embodiment of the present disclosure;
FIG. 5 is a top view of a stator core according to an embodiment of the present disclosure;
FIG. 6 is a schematic diagram of wire winding of three phase windings according to an embodiment of the present disclosure;
FIG. 7 is a schematic diagram of wire winding of a U-phase winding according to an embodiment of the present disclosure;
FIG. 8 is a schematic diagram of wire winding of a V-phase winding according to an embodiment of the present disclosure;
FIG. 9 is a schematic diagram of wire winding of a W-phase winding according to an embodiment of the present disclosure;
FIG. 10 is a schematic diagram of wire winding of a first branch of a U-phase winding according to an embodiment of the present disclosure;
FIG. 11 is a schematic diagram of wire winding of a second branch of a U-phase winding according to an embodiment of the present disclosure;
FIG. 12 is a schematic diagram of wire winding of a first branch of a V-phase winding according to an embodiment of the present disclosure;
FIG. 13 is a schematic diagram of wire winding of a second branch of a V-phase winding according to an embodiment of the present disclosure;
FIG. 14 is a schematic diagram of wire winding of a first branch of a W-phase winding according to an embodiment of the present disclosure;
FIG. 15 is a schematic diagram of wire winding of a second branch of a W-phase winding according to an embodiment of the present disclosure;
FIG. 16 is a schematic diagram of a structure of a U-shaped wire according to an embodiment of the present disclosure;
FIG. 17 is a schematic diagram of another structure of a U-shaped wire according to an embodiment of the present disclosure;
FIG. 18 is a schematic diagram of another structure of a U-shaped wire according to an embodiment of the present disclosure;
FIG. 19 is a schematic diagram of another structure of a U-shaped wire according to an embodiment of the present disclosure;
FIG. 20 is a schematic diagram of another structure of a U-shaped wire according to an embodiment of the present disclosure;
FIG. 21 is a schematic diagram of another structure of a U-shaped wire according to an embodiment of the present disclosure;
FIG. 22 is a schematic diagram of another structure of a U-shaped wire according to an embodiment of the present disclosure;
FIG. 23 is a schematic diagram of another structure of a U-shaped wire according to an embodiment of the present disclosure;
FIG. 24 is a schematic diagram of another structure of a U-shaped wire according to an embodiment of the present disclosure;
FIG. 25 is a schematic diagram of a connection of three phase windings according to an embodiment of the present disclosure;
FIG. 26 is a schematic diagram of another connection of three phase windings according to an embodiment of the present disclosure; and
FIG. 27 is a schematic diagram of a vehicle according to an embodiment of the present disclosure.

### DESCRIPTION OF EMBODIMENTS

For ease of understanding of this application, the following provides a more comprehensive description of this application with reference to related accompanying drawings. Preferred implementations of this application are provided in the accompanying drawings. However, this application may be implemented in a plurality of different forms, and is not limited to the implementations described in this specification. On the contrary, an objective of providing these implementations is to enable a more thorough and comprehensive understanding of the disclosure of this application.

The following descriptions of the embodiments are shown with reference to accompanying drawings to illustrate specific embodiments that may be used to implement this application. A sequence number such as "first" or "second" of a component in this specification is merely used to distinguish between described objects, and does not have any sequence or technical meaning. In addition, unless otherwise specified, the term "connect" and "joint" in this application both include direct and indirect connection (joint). The directional terms mentioned in this application, for example, "upper", "lower", "front", "rear", "left", "right", "internal", "external", and "side", are merely directions based on the accompanying drawings. Therefore, the directional terms are used to better and more clearly describe and understand this application, instead of indicating or implying that a specified apparatus or element should have a specific orientation or be constructed and operated in a specific orientation. Therefore, this cannot be understood as a limitation on this application.

In the descriptions of this application, it will be noted that, unless otherwise specified and limited, terms "mount", "communicate", and "connect" will be understood in a broad sense, for example, may be a fixed connection, a detachable connection, or an integrated connection, may be a mechanical connection, may be a direct connection or an indirect connection by using an intermediate medium, or may be a connection between the inside of two elements. A person of ordinary skill in the art may understand specific meanings of the foregoing terms in this application based on specific situations. It will be noted that terms such as "first" and "second" in the specification, claims, and accompanying drawings of this application are used to distinguish between different objects, and are not used to describe a specific sequence. In addition, the terms "include", "may include", "comprise", or "may comprise" used in this application indicate existence of a disclosed corresponding function, operation, element, or the like, and do not limit one or more other functions, operations, elements, or the like. In addition, the term "include" or "comprise" indicates existence of corresponding features, numbers, steps, operations, elements, components, or combinations thereof disclosed in this specification, does not rule out existence or addition of one or more other features, numbers, steps, operations, elements, components, or combinations thereof, and is intended to cover non-exclusive inclusions.

Unless otherwise defined, all technical and scientific terms used in this specification have the same meaning as those commonly understood by those skilled in the art that belong to this application. The terms used in this specification of this application are merely intended to describe specific implementations, and are not intended to limit this application.

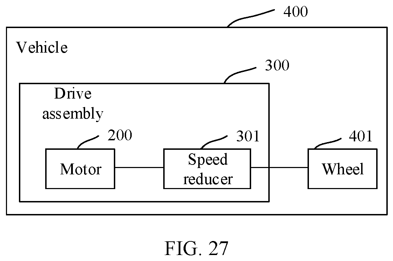

Reference is made to a schematic diagram of a vehicle according to an embodiment of the present disclosure shown in FIG. 27.

As shown in FIG. 27, the present disclosure provides a vehicle 400, including a wheel 401 and a drive assembly 300. The drive assembly 300 includes a motor 200 and a speed reducer 301. The speed reducer 301 is in transmission connection between the motor 200 and the wheel 401. The motor 200 drives the wheel 401 to rotate to control operation of the vehicle 400 in the present disclosure. It will be understood that, in some other embodiments, the motor 200 can also be applied to another place in which power output needs to be implemented, which is not specifically limited by the applicant.

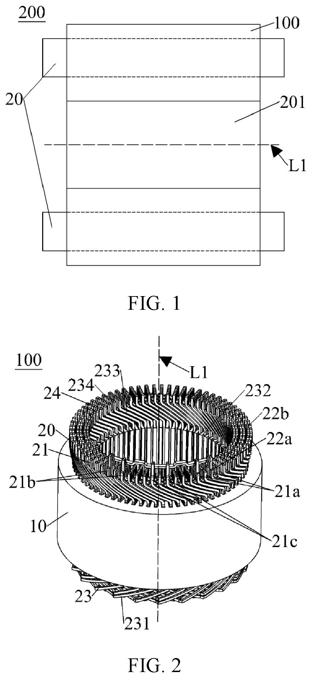

Reference is made to a schematic diagram of a structure of a motor 200 according to an embodiment of the present disclosure shown in FIG. 1.

As shown in FIG. 1, the motor 200 in the present disclosure includes a motor rotor 201 and a motor stator 100, where the motor stator 100 is substantially cylindrical and has a geometric central axis L1. The motor rotor 201 is located on an inner side of the motor stator 100, and can rotate around the geometric central axis L1.

The motor stator 100 is wound with three phase windings 20, and the three phase windings 20 can form a plurality of pairs of magnetic poles (not shown in the figure) under action of an external current. Under the action of the external current, the magnetic pole forms a magnetic field, and the motor rotor 201 is made to rotate around the geometric central axis L1 under action of the magnetic field, thereby implementing a power output function of the motor 200 in the present disclosure.

The motor 200 provided in the present disclosure can be applied to a vehicle. The motor 200 is housed in the vehicle to provide power of operation for the vehicle. It will be understood that the motor 200 in the present disclosure can also be applied to another device that needs power output, which is not specifically limited by the applicant.

Reference is made to a schematic diagram of a structure of a motor stator 100 according to an embodiment of the present disclosure shown in FIG. 2.

As shown in FIG. 2, the motor stator 100 includes a stator core 10 and three phase windings 20. The three phase windings 20 are wound around the motor stator 100.

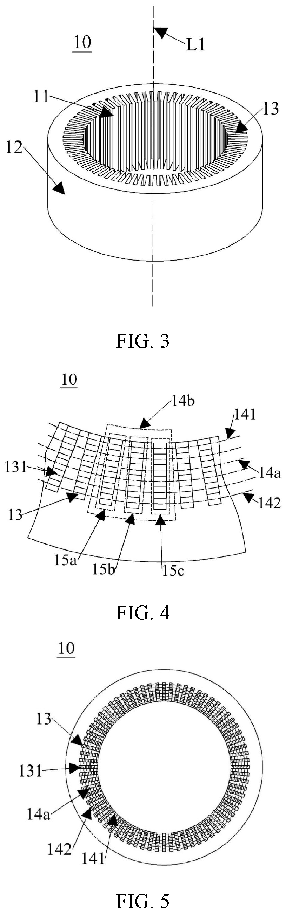

Specifically, reference is made to a schematic diagram of a structure of a stator core 10 according to an embodiment of the present disclosure shown in FIG. 3.

As shown in FIG. 3, the stator core 10 is substantially cylindrical and has an inner wall 11 and an outer wall 12 that are opposite. Both the inner wall 11 and the outer wall 12 are cylindrical, and geometric central axes of the inner wall 11 and the outer wall 12 are both the geometric central axis L1 of the motor stator 100.

As shown in FIG. 3, a plurality of stator slots 13 are provided on the inner wall 11, and the stator slots 13 are evenly distributed in a circumferential direction of the inner wall 11, so as to equally divide circumference of the inner wall 11 into a plurality of parts with the same angle. In addition, each stator slot 13 extends toward the outer wall 12 in a radius direction of the stator core 10, and has the same extension distance. In a direction along the geometric central axis L1, each stator slot 13 runs through the entire stator core 10, to facilitate winding of the three phase windings 20.

Reference is made to a schematic diagram of a partial structure of a stator core 10 according to an embodiment of the present disclosure shown in FIG. 4.

As shown in FIG. 4, there are a plurality of wire slots 131 in a single stator slot 13, where the plurality of wire slots 131 are arranged in the radius direction of the stator core 10, and distances from wire slots 131 in the same stator slot 13 to the geometric central axis L1 are different. That is, radii of the wire slots 131 in the same stator slot 13 are different.

Because stator slots 13 are evenly distributed in a circumferential direction of the stator core 10, it will be understood that there are wire slots 131 with the same radius in each stator slot 13. As shown in FIG. 5, the wire slots 131 with the same radius are disposed in the same wire slot layer 14a. It will be understood that a quantity of wire slot layers 14a is the same as a quantity of wire slots 131 in a single stator slot 13.

As shown in FIG. 4, the quantity of wire slots 131 in a single stator slot 13 is 6. Therefore, as shown in FIG. 5, the stator core 10 has six wire slot layers 14a with different radius dimensions around the geometric central axis L1. A wire slot layer 14a with a smallest radius dimension is close to a central region of sequentially surrounding wire slot layers 14a, and is defined as a slot opening layer 141. A wire slot layer 14a with a largest radius dimension is far away from the central region of the sequentially surrounding wire slot layers 14a, and is defined as a slot bottom layer 142. It will be understood that, in some other embodiments, a quantity of corresponding wire slot layers 14a varies as a quantity of wire slots 131 in a single stator slot 13 varies.

For the motor stator 100 in the present disclosure, a quantity of poles corresponding to the motor stator 100 in the present disclosure is 8. As shown in FIG. 5, the stator core 10 includes 72 stator slots 13. Therefore, the motor stator 100 in the present disclosure can be adapted to a pole-slot combination with 8 poles and 72 slots. On the basis that the motor stator 100 in the present disclosure uses the three phase windings 20 to wind the stator core 10, and a quantity of slots per pole per phase = a quantity of slots/a quantity of phases/a quantity of poles, it will be understood that the quantity of slots per pole per phase of the motor stator 100 in the present disclosure is 3.

Therefore, in the circumferential direction of the stator core 10, every three adjacent stator slots 13 can form one stator slot group 14b, and on the basis that a quantity of stator slots 13 is 72, a quantity of corresponding stator slot groups 14b is 24. Each stator slot 13 corresponds to only one stator slot group 14b. That is, there is no case in which one stator slot 13 is located in two stator slot groups 14b simultaneously. It will be understood that the motor stator 100 in the present disclosure can alternatively be correspondingly adapted to another pole-slot combination, and a corresponding quantity of slots per pole per phase is adaptively adjusted, which is not specifically limited by the applicant.

In addition, as shown in FIG. 4, for a single stator slot group 14b, the three stator slots 13 respectively form a first phase band 15a, a second phase band 15b, and a third phase band 15c, where the first phase band 15a is relatively close to a W-phase winding 21c, the third phase band 15c is relatively close to a V-phase winding 21b, and the second phase band 15b is located between the first phase band 15a and the third phase band 15c.

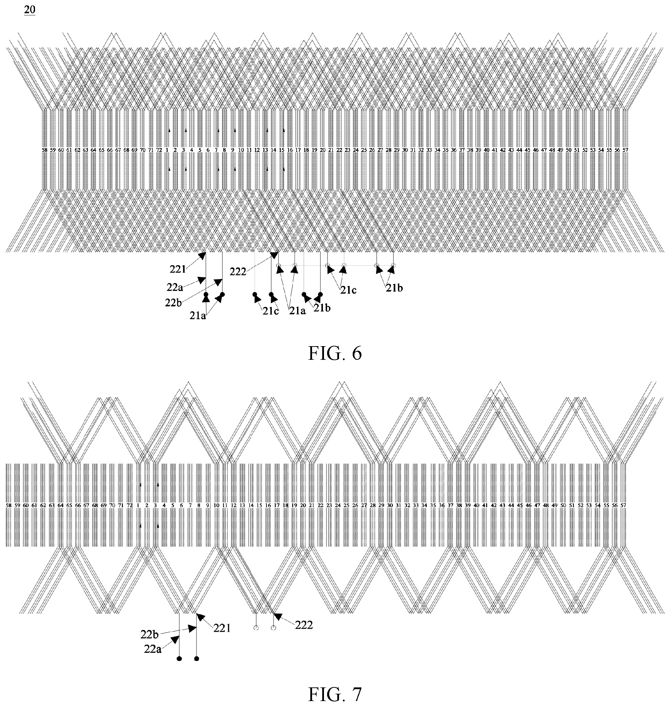

Reference is made to a schematic diagram of wire winding of three phase windings 20 according to an embodiment of the present disclosure shown in FIG. 6. For ease of description, in FIG. 6, the stator slots 13 are sequentially numbered clockwise 1 to 72, and the two stator slots 13 numbered 57 and 58 are separated and extended to form FIG. 6. In addition, for ease of description, in FIG. 6, wire slots 131 of each stator slot 13 are horizontally laid out, and are shown in FIG. 6 as being arranged sequentially from the slot opening layer 141 to the slot bottom layer 142 from left to right in a single stator slot 13.

As shown in FIG. 6, for one branch 22 of a single-phase winding 21, a connecting wire between the slot opening layer 141 and the slot bottom layer 142 is configured to implement conversion between different phase bands 15. However, a connecting wire between the slot opening layer 141 and the slot bottom layer 142 is configured to implement conversion between different wire slot layers 14a within the same phase band 15.

As shown in FIG. 6, phase windings 21 of the three phase windings 20 pass through three adjacent stator slot groups 14b simultaneously, and are sequentially wound in the circumferential direction of the stator core 10. That is, two adjacent stator slot groups 14b in which the same winding 21 is wound are spaced apart by two stator slot groups 14b, and windings 21 of remaining two phases are respectively wound in the two stator slot groups 14b.

The three phase windings 20 include a U-phase winding 21a, a V-phase winding 21b, and a W-phase winding 21c. All stator slot groups 14b are evenly divided by the phase windings 21. On the basis that a quantity of stator slot groups 14b is 24, it will be understood that the U-phase winding 21a, the V-phase winding 21b, and the W-phase winding 21c are each wound in eight stator slot groups 14b.

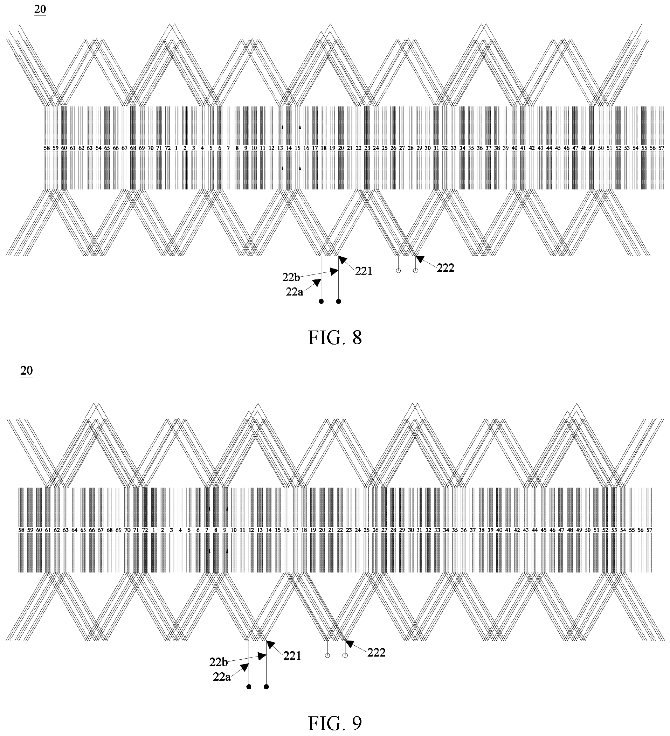

Stator slots 13 in which the U-phase winding 21a is wound are distributed in stator slots 13 numbered 1 to 3, 10 to 12, 19 to 21, 28 to 30, 37 to 39, 46 to 48, 55 to 57, and 64 to 66 (as shown in FIG. 7). Stator slots 13 in which the V-phase winding 21b is wound are distributed in stator slots 13 numbered 4 to 6, 13 to 15, 22 to 24, 31 to 33, 40 to 42, 49 to 51, 58 to 60, and 67 to 69 (as shown in FIG. 8). Stator slots 13 in which the W-phase winding 21c is wound are distributed in stator slots 13 numbered 7 to 9, 16 to 18, 25 to 27, 34 to 36, 43 to 45, 52 to 54, 61 to 63, and 70 to 72 (as shown in FIG. 9).

It will be understood that in this embodiment, the stator slot 13 numbered 1 may be a stator slot 13 numbered another number. That is, in the foregoing diagram, the stator slot 13 numbered 1, which serves as a starting point, may be any stator slot 13 in FIG. 3, which is not specifically limited by the applicant.

In addition, as shown in FIG. 6 to FIG. 9, the U-phase winding 21a, the V-phase winding 21b, and the W-phase winding 21c each include two branches 22, where the two branches 22 are respectively a first branch 22a and a second branch 22b, and the first branch 22a and the second branch 22b cooperate with each other to implement wire winding of stator slot groups 14b corresponding to the U-phase winding 21a, the V-phase winding 21b, and the W-phase winding 21c. Because a quantity of branches 22 is determined by power of the motor 200 in the present disclosure, in another embodiment, a quantity of branches 22 of each phase winding 21 of the motor stator 100 in the present disclosure may be another value.

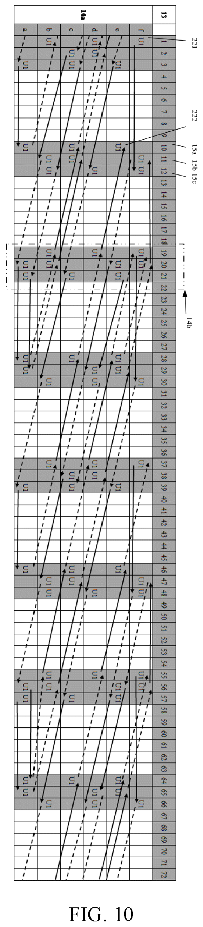

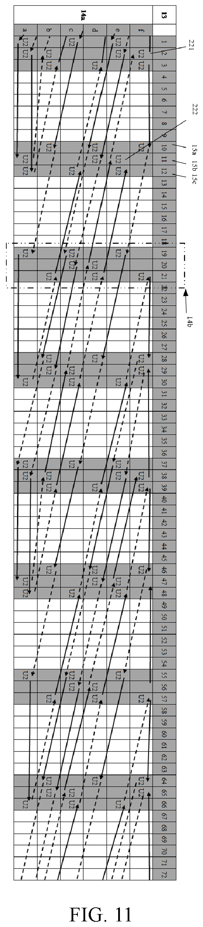

Specifically, reference is made to a schematic diagram of wire winding of a first branch 22a of a U-phase winding 21a according to an embodiment of the present disclosure shown in FIG. 10, and reference is made to a schematic diagram of wire winding of a second branch 22b of a U-phase winding 21a according to an embodiment of the present disclosure shown in FIG. 11. For ease of description, in FIG. 10 and FIG. 11, wire winding of the two branches 22 shown in FIG. 7 is simplified into a table, and dashed lines and solid lines are used to represent a wire winding relationship between the wire slots 131.

On the basis that the U-phase winding 21a has two branches 22, it will be understood that, as shown in FIG. 10 and FIG. 11, wire winding configurations of the two branches 22 enable wire winding to be performed on all the stator slots 13 in the eight stator slot groups 14b corresponding to the U-phase winding 21a, and each wire slot 131 of each stator slot 13 has a branch 22 to pass through, thereby ensuring a copper fill factor of the U-phase winding 21a. Furthermore, copper fill factors of the three phase windings 20 are ensured.

In addition, as shown in FIG. 10, for the first branch 22a of the U-phase winding 21a, stator slots 13 numbered 1 to 3 and 37 to 39 have the same winding configuration, stator slots 13 numbered 10 to 12 and 46 to 48 have the same winding configuration, stator slots 13 numbered 19 to 21 and 55 to 57 have the same winding configuration, and stator slots 13 numbered 28 to 30 and 64 to 66 have the same winding configuration.

As shown in FIG. 10, the branch 22 enters from the wire slot 131 numbered f of the wire slot layer 14a in the stator slot 13 numbered 1, and exits from the wire slot 131 numbered e of the wire slot layer 14a in the stator slot 13 numbered 10 (for ease of description, the slot opening layer 141 is numbered a, the slot bottom layer 142 is numbered f, and layers from the slot opening layer 141 to the slot bottom layer 142 are sequentially numbered a to f).

Taking the winding configuration of the stator slots 13 numbered 1 to 3 and the stator slots 13 numbered 37 to 39 as an example, the winding configuration is described as follows:

In the stator slots 13 numbered 1 to 3, the first branch 22a of the U-phase winding 21a starts from a wire slot 131 numbered 1f, and passes through wire slots 131 sequentially numbered 1f, 3a, 1b, 3c, 2d, 2c, 1d, and 3e of the stator slot group 14b.

In the stator slots 13 numbered 37 to 39, the first branch 22a of the U-phase winding 21a starting from the wire slot 131 numbered 1f enters from a wire slot 131 numbered 39c in the stator slot group 14b, and passes through wire slots 131 sequentially numbered 39c, 38d, 38c, 37d, 39e, 37f, 39a, and 37b of the stator slot group 14b.

For the stator slots 13 numbered 1 to 3 and the stator slots 13 numbered 37 to 39, the first branch 22a of the U-phase winding 21a passes through the wire slots 131 numbered 1f and 1d, and also passes through the wire slots 131 numbered 37f and 37d. The first branch 22a of the U-phase winding 21a passes through the wire slots 131 numbered 2d and 2c, and also passes through the wire slots 131 numbered 38d and 38c. The first branch 22a of the U-phase winding 21a passes through the wire slots 131 numbered 3a, 3c, and 3e, and also passes through the wire slots 131 numbered 39a, 39c, and 39e.

That is, that the stator slots 13 numbered 1 to 3 have the same winding configuration as the stator slots 13 numbered 37 to 39 means that when the branch 22 passes through the stator slots 13 numbered 1 to 3 and the stator slots 13 numbered 37 to 39, wire slots 131 that the branch 22 passes through are the same, and when the branch 22 passes through same wire slots 131, the branch 22 has the same winding direction.

Therefore, for the U-phase winding 21a, in the stator slot groups 14b in which the U-phase winding 21a is wound, two stator slot groups 14b that are spaced apart by three stator slot groups 14b have the same winding configuration. Correspondingly, the two stator slot groups 14b with the same winding configuration are spaced apart by a total of 11 stator slot groups 14b. On the basis that there are a total of 24 stator slot groups 14b, it will be understood that the two stator slot groups 14b with the same winding configuration are centrally symmetrical.

It will be understood that, in FIG. 11, two stator slot groups 14b with the same winding direction are also centrally symmetrical. Therefore, for the U-phase winding 21a, in the stator slot groups 14b in which the U-phase winding 21a is wound, two stator slot groups 14b that are centrally symmetrical have the same wire winding configuration.

For the same branch 22, when wire winding configurations of the two stator slot groups 14b that are centrally symmetrical are asymmetric, the branch 22 has no symmetry, which may lead to current circulation of the branch 22. However, because the two branches 22 of a same-phase winding 21 are connected in parallel to each other, presence of current circulation may cause a voltage difference generated between the first branch 22a and the second branch 22b. This leads to a problem of power imbalance in the motor stator 100, thereby affecting operational reliability of the motor stator 100.

Therefore, in the motor stator 100 of the present disclosure, by winding each branch 22 of each phase winding 21 in the plurality of stator slot groups 14b spaced apart from each other, and making two centrally symmetrical stator slot groups 14b in which the same branch 22 is wound have the same winding configuration, a symmetry of the branch 22 is ensured, thereby avoiding a loop current generated by the branch 22 due to asymmetry. This, in turn, improves operational reliability of the motor stator 100 in the present disclosure.

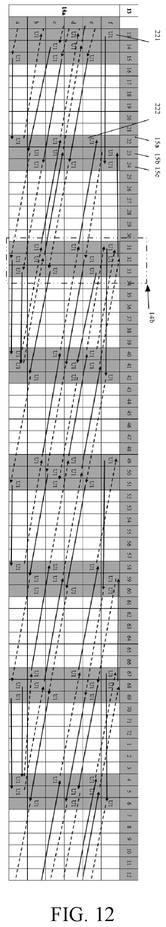

In addition, wire winding configurations of the two branches 22 of the V-phase winding 21b are the same as a wire winding configuration of the U-phase winding 21a, so as to eliminate a potential difference between the U-phase winding 21a and the V-phase winding 21b. As shown in FIG. 10 and FIG. 12, for first branches 22a of the U-phase winding 21a and the V-phase winding 21b, a wire winding configuration of the first branch 22a of the stator slots 13 numbered 1 to 3 in the U-phase winding 21a in FIG. 10 is the same as a wire winding direction of the first branch 22a of the stator slots 13 numbered 13 to 15 in the V-phase winding 21b in FIG. 12.

Correspondingly, a wire winding configuration numbered 10 to 12 in FIG. 10 is the same as a wire winding configuration numbered 22 to 24 in FIG. 12, a wire winding configuration numbered 19 to 21 in FIG. 10 is the same as a wire winding configuration numbered 31 to 33 in FIG. 12, and a wire winding configuration numbered 28 to 30 in FIG. 10 is the same as a wire winding configuration numbered 40 to 42 in FIG. 12. In addition, the first branch 22a shown in FIG. 12 also has symmetry.

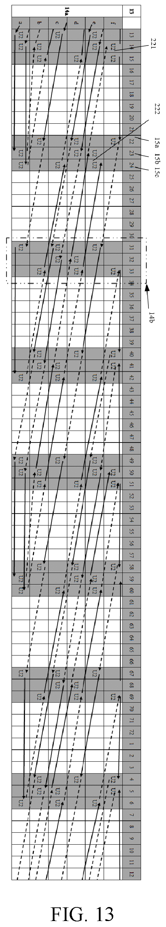

It will be understood that, as shown in FIG. 11 and FIG. 13, second branches 22b of the V-phase winding 21b and the U-phase winding 21a also have the same wire winding configuration. Therefore, wire winding consistency between the V-phase winding 21b and the U-phase winding 21a is ensured, and a potential difference between the V-phase winding 21b and the U-phase winding 21a due to wire winding inconsistency is avoided.

In addition, as shown in FIG. 10, FIG. 11, FIG. 14, and FIG. 15, the two branches 22 of the U-phase winding 21a and the two branches 22 of the W-phase winding 21c also have the same wire winding configuration, respectively. Therefore, the U-phase winding 21a, the V-phase winding 21b, and the W-phase winding 21c have the same wire winding configuration, thereby ensuring that potentials of the phase windings 21 are the same. Furthermore, operational reliability of the motor stator 100 in the present disclosure is improved.

In an embodiment, the two branches 22 each have a wire inlet end 221, and the wire inlet ends 221 of the two branches 22 are located in the same stator slot group 14b, and are located on the same wire slot layer 14a. The wire inlet ends 221 of the two branches 22 are spaced apart by one stator slot 13. As shown in FIG. 10 and FIG. 11, the wire inlet ends 221 of the two branches 22 are both located on the slot bottom layer 142, and the wire inlet ends 221 of the two branches 22 are respectively located in the stator slots 13 numbered 1 and 3.

It will be understood that the wire inlet ends 221 of the two branches 22 are distributed in different stator slots 13 at intervals, thereby ensuring wire winding symmetry of the two branches 22. In addition, the wire inlet ends 221 of the two branches are disposed in the same stator slot group 14b, and the wire inlet ends 221 of the two branches are made to be spaced apart by one stator slot 13, so that the two wire inlet ends 221 are electrically connected.

Moreover, the two branches 22 each have a wire outlet end 222, and the wire outlet ends 222 of the two branches 22 are located in the same stator slot group 14b, and are located on the same wire slot layer 14a. The wire outlet ends 222 of the two branches 22 are spaced apart by one stator slot 13. As shown in FIG. 10 and FIG. 11, the wire outlet ends 222 of the two branches 22 are both located on a wire slot layer 14a adjacent to the slot bottom layer 142, and the wire outlet ends 222 of the two branches 22 are respectively located in the stator slots 13 numbered 10 and 12.

It will be understood that the wire outlet ends 222 of the two branches 22 are distributed in different stator slots 13 at intervals, thereby ensuring wire winding symmetry of the two branches 22. In addition, the wire outlet ends 222 of the two branches are disposed in the same stator slot group 14b, and the wire outlet ends 222 of the two branches are made to be spaced apart by one stator slot 13, so that the two wire outlet ends 222 are electrically connected. Furthermore, it is convenient to implement parallel connection between the two branches 22 of the U-phase winding 21a.

In addition, in this embodiment, the wire inlet end 221 and the wire outlet end 222 of each branch 22 are located on two adjacent wire slot layers 14a, and a radius dimension of the wire slot layer 14a in which the wire inlet end 221 of the branch 22 is located is greater than a radius dimension of the wire slot layer 14a in which the wire outlet end 222 of the branch 22 is located. As shown in FIG. 10 and FIG. 11, the wire inlet ends 221 of the two branches 22 are located on the slot bottom layer 142, and the wire outlet ends 222 of the two branches 22 are located on the wire slot layer 14a adjacent to the slot bottom layer 142.

It will be understood that, when wire winding is performed on a single branch 22, the wire winding can begin from a slot bottom of the stator slot 13 in the radius direction of the stator core 10 and extend outwards from the wire slot layer 14a close to a slot opening. Therefore, parallel connection between the two branches 22 is simplified, a wire winding process of each branch 22 is also simplified, and wire winding quality is improved.

In an embodiment, referring back to FIG. 2, each branch 22 includes a plurality of U-shaped wires 23 sequentially connected in series, where each U-shaped wire 23 includes a bent end 231, and a welded end 24 is formed between two adjacent U-shaped wires 23.

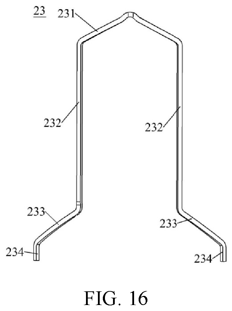

Specifically, reference is made to a schematic diagram of a structure of a U-shaped wire 23 according to an embodiment of the present disclosure shown in FIG. 16, and reference is made to FIG. 2 and FIG. 10 in combination.

As shown in FIG. 16, each U-shaped wire 23 includes a bent end 231, a conducting wire 232, a bent portion 233, and a supporting foot 234. There are two conducting wires 232, two bent portions 233, and two supporting feet 234. The conducting wire 232 is linear and extends in a vertical direction, and the bent end 231 spans between the two conducting wires 232 to implement electrical connection between the two conducting wires 232. An end of each conducting wire 232 that faces away from the bent end 231 is electrically connected to the bent portion 233 and the supporting foot 234 in sequence.

As shown in FIG. 2, a U-shaped wire 23 spans between two stator slots 13 in two stator slot groups 14b, and the two conducting wires 232 are made to respectively pass through two wire slots 131 of the corresponding stator slots 13. Correspondingly, another U-shaped wire 23 of the branch 22 that is adjacent to the U-shaped wire 23 also spans between two other stator slot groups 14b, and two adjacent supporting feet 234 of the two U-shaped wires 23 are welded to each other, thereby forming a welded end 24.

The welded end 24 includes two adjacent supporting feet 234 and two adjacent bent portions 233 of two adjacent U-shaped wires 23. It will be understood that, while implementing series connection between the two U-shaped wires 23, the welded end 24 also implements span between two stator slots 13 in two stator slot groups 14b.

When a full pitch is n, a span of the first branch 22a at a bent end 231 of the slot bottom layer 142 is n and n+2, and a span of the first branch 22a at a bent end 231 of the slot opening layer 141 is n-2 and n-1. A span of the second branch 22b at the bent end 231 of the slot bottom layer 142 is n-2 and n, and a span of the second branch 22b at the bent end 231 of the slot opening layer 141 is n+1 and n+2, where the full pitch is n.

Specifically, for a motor stator 100 with 8 poles and 72 slots, the full pitch n is 9. Referring back to FIG. 10, for the first branch 22a of the U-phase winding 21a, a solid line in FIG. 10 represents a bent end 231 of the U-shaped wire 23, and a dashed line represents a welded end 24 formed between two adjacent U-shaped wires 23. The branch 22 enters from the wire slot 131 numbered f of the wire slot layer 14a in the stator slot 13 numbered 1, and exits from the wire slot 131 numbered e of the wire slot layer 14a in the stator slot 13 numbered 10 (for ease of description, the slot opening layer 141 is numbered a, the slot bottom layer 142 is numbered f, and layers from the slot opening layer 141 to the slot bottom layer 142 are sequentially numbered a to f).

Wire slots 131 that the U-shaped wires 23 in the branch 22 sequentially pass through are wire slots 131 numbered 1f to 12f, 21e to 30d, 39c to 48b, 57a to 65a, 56b to 47c, 38d to 29e, 20f to 11f, 20e to 29d, 38c to 47b, 56a to 64a, 55b to 46c, 37d to 28e, 19f to 30f, 39e to 48d, 57c to 66b, 3a to 10a, 1b to 64c, 55d to 46e, 37f to 48f, 57e to 66d, 3c to 12b, 21a to 29a, 20b to 11c, 2d to 65e, 56f to 47f, 56e to 65d, 2c to 11b, 20a to 28a, 19b to 10c, 1d to 64e, 55f to 66f, 3e to 12d, 21c to 30b, 39a to 46a, 37b to 28c, and 19d to 10e.

It can be learned that in this embodiment of the present disclosure, while being wound in the stator slot groups 14b, the first branch 22a is further wound between different wire slot layers 14a in a radial direction of the stator core 10. A span of the bent end 231 spanning between two adjacent wire slot layers 14a is a full pitch; and a span of the welded end 24 spanning between two adjacent wire slot layers 14a is also a full pitch.

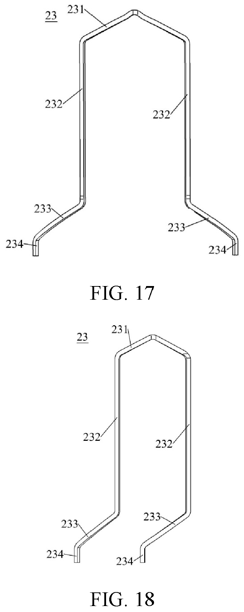

On the basis that a value of the full pitch is 9 in this embodiment of the present disclosure, a U-shaped wire 23 spanning between wire slot layers 14a numbered b and c may be the U-shaped wire 23 shown in FIG. 16. For example, 39c to 48b may use the U-shaped wire 23 shown in FIG. 16. A U-shaped wire 23 spanning between wire slot layers 14a numbered d and e may be the U-shaped wire 23 shown in FIG. 17. For example, 21e to 30d may use the U-shaped wire 23 shown in FIG. 17.

It will be understood that a span of the U-shaped wire 23 between wire slot layers 14a between the slot opening layer 141 and the slot bottom layer 142 is designated as a full pitch, which can implement wire winding switching spanning between same phase bands 15 of two different stator slot groups 14b in the radial direction of the stator core 10 by using the U-shaped wire 23, thereby simplifying a wire winding process of the first branch 22a.

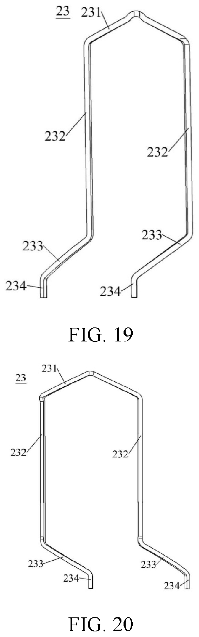

As shown in FIG. 10, in the slot opening layer 141, a span of the bent end 231 spanning between two wire slot layers 14a numbered a is 7 and 8. Correspondingly, a U-shaped wire 23 with a span of 7 spanning between two wire slot layers 14a numbered a may be the U-shaped wire 23 shown in FIG. 18. For example, 3a to 10a and 39a to 46a may use the U-shaped wire 23 shown in FIG. 18. A U-shaped wire 23 with a span of 8 spanning between two wire slot layers 14a numbered a may be the U-shaped wire 23 shown in FIG. 19. For example, 57a to 65a, 56a to 64a, 21a to 29a, and 20a to 28a may use the U-shaped wire 23 shown in FIG. 19.

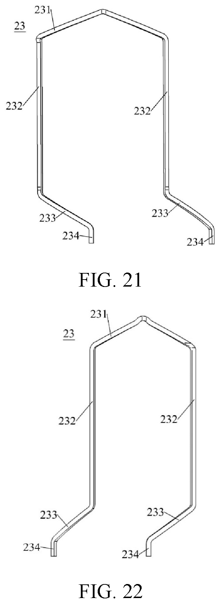

In the slot bottom layer 142, a span of the bent end 231 spanning between two wire slot layers 14a numbered f is 9 and 11. Correspondingly, a U-shaped wire 23 with a span of 9 spanning between two wire slot layers 14a numbered f may be the U-shaped wire 23 shown in FIG. 20. For example, 20f to 11f and 56f to 47f may both use the U-shaped wire 23 shown in FIG. 20. A U-shaped wire 23 with a span of 11 spanning between two wire slot layers 14a numbered f may be the U-shaped wire 23 shown in FIG. 21. For example, 1f to 12f, 19f to 30f, 37f to 48f, and 55f to 66f may all use the U-shaped wire 23 shown in FIG. 21.

It will be understood that the first branch 22a spans between U-shaped wires 23 of the slot opening layer 141 and the slot bottom layer 142, thereby implementing span between different phase bands 15, implementing wire winding switching between different phase bands 15, and reducing an angle difference on the first branch 22a.

Referring back to FIG. 11, for the second branch 22b of the U-phase winding 21a, a solid line in FIG. 11 represents a bent end 231 of the U-shaped wire 23, and a dashed line represents a welded end 24 formed between two adjacent U-shaped wires 23. The branch 22 enters from the wire slot 131 numbered f of the wire slot layer 14a in the stator slot 13 numbered 3, and exits from the wire slot 131 numbered e of the wire slot layer 14a in the stator slot 13 numbered 12 (for ease of description, the slot opening layer 141 is numbered a, the slot bottom layer 142 is numbered f, and layers from the slot opening layer 141 to the slot bottom layer 142 are sequentially numbered from a to f).

Wire slots 131 that the U-shaped wires 23 in the branch 22 sequentially pass through are wire slots 131 numbered 3f to 10f, 19e to 28d, 37c to 46b, 55a to 66a, 57b to 48c, 39d to 30e, 21f to 28f, 37e to 46d, 55c to 64b, 1a to 11a, 2b to 65c, 56d to 47e, 38f to 29f, 38e to 47d, 56c to 65b, 2a to 12a, 3b to 66c, 57d to 48e, 39f to 46f, 55e to 64d, 1c to 10b, 19a to 30a, 21b to 12c, 3d to 66e, 57f to 64f, 1e to 10d, 19c to 28b, 37a to 47a, 38b to 29c, 20d to 11e, 2f to 65f, 2e to 11d, 20c to 29b, 38a to 48a, 39b to 30c, and 21d to 12e.

It can be learned that in this embodiment of the present disclosure, while being wound in the stator slot groups 14b, the second branch 22b is further wound between different wire slot layers 14a in the radial direction of the stator core 10. A span of the bent end 231 spanning between two adjacent wire slot layers 14a is a full pitch; and a span of the welded end 24 spanning between two adjacent wire slot layers 14a is also a full pitch.

On the basis that a value of the full pitch is 9 in this embodiment of the present disclosure, a U-shaped wire 23 spanning between wire slot layers 14a numbered b and c may be the U-shaped wire 23 shown in FIG. 16. For example, 37c to 46b may use the U-shaped wire 23 shown in FIG. 16. a U-shaped wire 23 spanning between wire slot layers 14a numbered d and e may be the U-shaped wire 23 shown in FIG. 17. For example, 19e to 28d may use the U-shaped wire 23 shown in FIG. 17.

It will be understood that a span of the U-shaped wire 23 between wire slot layers 14a between the slot opening layer 141 and the slot bottom layer 142 is designated as a full pitch, which can implement wire winding switching spanning between same phase bands 15 of two different stator slot groups 14b in the radial direction of the stator core 10 by using the U-shaped wire 23, thereby simplifying a wire winding process of the second branch 22b.

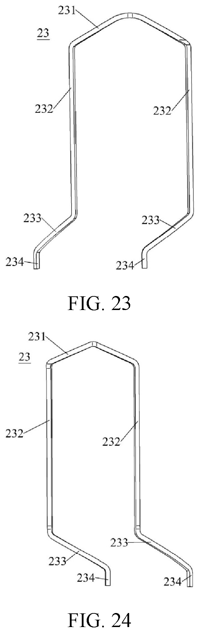

As shown in FIG. 11, in the slot opening layer 141, a span of the bent end 231 spanning between two wire slot layers 14a numbered a is 10 and 11. Correspondingly, a U-shaped wire 23 with a span of 10 spanning between two wire slot layers 14a numbered a may be the U-shaped wire 23 shown in FIG. 22. For example, 1a to 11a, 2a to 12a, 37a to 47a, and 38a to 48a may use the U-shaped wire 23 shown in FIG. 22. A U-shaped wire 23 with a span of 11 spanning between two wire slot layers 14a numbered a may be the U-shaped wire 23 shown in FIG. 23. For example, 55a to 66a and 19a to 30a may both use the U-shaped wire 23 shown in FIG. 23.

In the slot bottom layer 142, a span of the bent end 231 spanning between two wire slot layers 14a numbered f is 7 and 9. Correspondingly, a U-shaped wire 23 with a span of 7 spanning between two wire slot layers 14a numbered f may be the U-shaped wire 23 shown in FIG. 24. For example, 3f to 10f, 21f to 28f, 39f to 46f, and 57f to 64f may all use the U-shaped wire 23 shown in FIG. 24. A U-shaped wire 23 with a span of 9 spanning between two wire slot layers 14a numbered f may be the U-shaped wire 23 shown in FIG. 20. For example, 38f to 29f and 2f to 65f may both use the U-shaped wire 23 shown in FIG. 20.

It will be understood that the second branch 22b spans between U-shaped wires 23 of the slot opening layer 141 and the slot bottom layer 142, implementing span between different phase bands 15, implementing wire winding switching between different phase bands 15, and reducing an angle difference on the second branch 22b.

In conclusion, for the first branch 22a and the second branch 22b of the U-phase winding 21a, in the U-shaped wire 23 used between the two branches 22, both the first branch 22a and the second branch 22b may use the U-shaped wire 23 shown in FIG. 16, FIG. 17, and FIG. 20. The U-shaped wires 23 shown in FIG. 18, FIG. 19, and FIG. 21 are only used by the first branch 22a, and the U-shaped wires 23 shown in FIG. 22, FIG. 23, and FIG. 24 are only used by the second branch 22b.

It will be understood that nine types of U-shaped wires shown in FIG. 16 to FIG. 24 cooperate with each other, so that the first branch 22a and the second branch 22b implement wire winding of the stator slot 13 of the U-phase winding 21a, thereby ensuring a copper fill factor of the stator slot 13 corresponding to the U-phase winding 21a. In addition, mutual cooperation between the nine types of U-shaped wires 23 and the first branch 22a and the second branch 22b avoids formation of circulation interference between the two branches 22, thereby improving operational reliability of the motor stator 100 in the present disclosure.

In an embodiment, as shown in FIG. 12, for the first branch 22a of the V-phase winding 21b, a solid line in FIG. 12 represents a bent end 231 of the U-shaped wire 23, and a dashed line represents a welded end 24 formed between two adjacent U-shaped wires 23. The branch 22 enters from the wire slot 131 numbered f of the wire slot layer 14a in the stator slot 13 numbered 13, and exits from the wire slot 131 numbered e of the wire slot layer 14a in the stator slot 13 numbered 22 (for ease of description, the slot opening layer 141 is numbered a, the slot bottom layer 142 is numbered f, and layers from the slot opening layer 141 to the slot bottom layer 142 are sequentially numbered from a to f).

Wire slots 131 that the U-shaped wires 23 in the branch 22 sequentially pass through are wire slots 131 numbered 13f to 24f, 33e to 42d, 51c to 60b, 69a to 5a, 68b to 59c, 50d to 41e, 32f to 23f, 32e to 41d, 50c to 59b, 68a to 4a, 67b to 58c, 49d to 40e, 31f to 42f, 51e to 60d, 69c to 6b, 15a to 22a, 13b to 4c, 67d to 58e, 49f to 60f, 69e to 6d, 15c to 24b, 33a to 41a, 32b to 23c, 14d to 5e, 68f to 59f, 68e to 5d, 14c to 23b, 32a to 40a, 31b to 22c, 13d to 4e, 67f to 6f, 15e to 24d, 33c to 42b, 51a to 58a, 49b to 40c, and 31d to 22e.

It can be learned that in this embodiment of the present disclosure, a U-shaped wire 23 of the first branch 22a that spans between wire slot layers 14a numbered b and c may also be the U-shaped wire 23 shown in FIG. 16. A U-shaped wire 23 spanning between wire slot layers 14a numbered d and e may also be the U-shaped wire 23 shown in FIG. 17. In addition, a span of the bent end 231 spanning between two wire slot layers 14a numbered a is also 7 and 8. Correspondingly, the U-shaped wire 23 shown in FIG. 18 and the U-shaped wire 23 shown in FIG. 19 may be respectively used. A span of the bent end 231 spanning between two wire slot layers 14a numbered f is also 9 and 11. Correspondingly, the U-shaped wire 23 shown in FIG. 20 and the U-shaped wire 23 shown in FIG. 21 may be respectively used.

As shown in FIG. 13, for the second branch 22b of the V-phase winding 21b, a solid line in FIG. 13 represents a bent end 231 of the U-shaped wire 23, and a dashed line represents a welded end 24 formed between two adjacent U-shaped wires 23. The branch 22 enters from the wire slot 131 numbered f of the wire slot layer 14a in the stator slot 13 numbered 15, and exits from the wire slot 131 numbered e of the wire slot layer 14a in the stator slot 13 numbered 24 (for ease of description, the slot opening layer 141 is numbered a, the slot bottom layer 142 is numbered f, and layers from the slot opening layer 141 to the slot bottom layer 142 are sequentially numbered from a to f).

Wire slots 131 that the U-shaped wires 23 in the branch 22 sequentially pass through are wire slots 131 numbered 15f to 22f, 31e to 40d, 49c to 58b, 67a to 6a, 69b to 60c, 51d to 42e, 33f to 40f, 49e to 58d, 67c to 4b, 13a to 23a, 14b to 5c, 68d to 59e, 50f to 41f, 50e to 59d, 68c to 5b, 14a to 24a, 15b to 6c, 69d to 60e, 51f to 58f, 67e to 4d, 13c to 22b, 31a to 42a, 33b to 24c, 15d to 6e, 69f to 4f, 13e to 22d, 31c to 40b, 49a to 59a, 50b to 41c, 32d to 23e, 14f to 5f, 14e to 23d, 32c to 41b, 50a to 60a, 51b to 42c, and 33d to 24e.

It will be understood that in this embodiment of the present disclosure, a U-shaped wire 23 of the second branch 22b that spans between wire slot layers 14a numbered b and c may also be the U-shaped wire 23 shown in FIG. 16. A U-shaped wire 23 spanning between wire slot layers 14a numbered d and e may also be the U-shaped wire 23 shown in FIG. 17. In addition, a span of the bent end 231 spanning between two wire slot layers 14a numbered a is also 10 and 11. Correspondingly, the U-shaped wire 23 shown in FIG. 22 and the U-shaped wire 23 shown in FIG. 23 may be separately used. A span of the bent end 231 spanning between two wire slot layers 14a numbered f is also 7 and 9. Correspondingly, the U-shaped wire 23 shown in FIG. 24 and the U-shaped wire 23 shown in FIG. 20 may be separately used.

In conclusion, for the first branch 22a and the second branch 22b of the V-phase winding 21b, in the U-shaped wire 23 used between the two branches 22, both the first branch 22a and the second branch 22b may use the U-shaped wire 23 shown in FIG. 16, FIG. 17, and FIG. 20. The U-shaped wires 23 shown in FIG. 18, FIG. 19, and FIG. 21 are only used by the first branch 22a, and the U-shaped wires 23 shown in FIG. 22, FIG. 23, and FIG. 24 are only used by the second branch 22b.

It will be understood that nine types of U-shaped wires shown in FIG. 16 to FIG. 24 cooperate with each other, so that the first branch 22a and the second branch 22b implement wire winding of the stator slot 13 of the V-phase winding 21b, thereby ensuring a copper fill factor of the stator slot 13 corresponding to the V-phase winding 21b. In addition, mutual cooperation between the nine types of U-shaped wires 23 and the first branch 22a and the second branch 22b avoids formation of circulation interference between the two branches 22, thereby improving operational reliability of the motor stator 100 in the present disclosure.

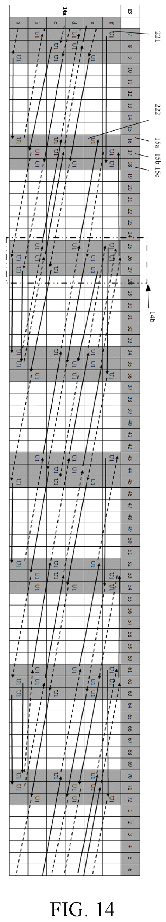

In an embodiment, as shown in FIG. 14, for the first branch 22a of the W-phase winding 21c, a solid line in FIG. 14 represents a bent end 231 of the U-shaped wire 23, and a dashed line represents a welded end 24 formed between two adjacent U-shaped wires 23. The branch 22 enters from the wire slot 131 numbered f of the wire slot layer 14a in the stator slot 13 numbered 7, and exits from the wire slot 131 numbered e of the wire slot layer 14a in the stator slot 13 numbered 16 (for ease of description, the slot opening layer 141 is numbered a, the slot bottom layer 142 is numbered f, and layers from the slot opening layer 141 to the slot bottom layer 142 are sequentially numbered from a to f).

Wire slots 131 that the U-shaped wires 23 in the branch 22 sequentially pass through are wire slots 131 numbered 7f to 18f, 27e to 36d, 45c to 54b, 63a to 71a, 62b to 53c, 44d to 35e, 26f to 17f, 26e to 35d, 44c to 53b, 62a to 70a, 61b to 52c, 43d to 34e, 25f to 36f, 45e to 54d, 63c to 72b, 9a to 16a, 7b to 70c, 61d to 52e, 43f to 54f, 63e to 72d, 9c to 18b, 27a to 35a, 26b to 17c, 8d to 71e, 62f to 53f, 62e to 71d, 8c to 17b, 26a to 34a, 25b to 16c, 7d to 70e, 61f to 72f, 9e to 18d, 27c to 36b, 45a to 52a, 43b to 34c, and 25d to 16e.

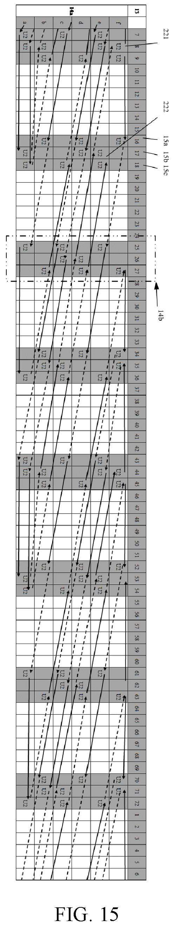

As shown in FIG. 15, for the second branch 22b of the W-phase winding 21c, a solid line in FIG. 15 represents a bent end 231 of the U-shaped wire 23, and a dashed line represents a welded end 24 formed between two adjacent U-shaped wires 23. The branch 22 enters from the wire slot 131 numbered f of the wire slot layer 14a in the stator slot 13 numbered 9, and exits from the wire slot 131 numbered e of the wire slot layer 14a in the stator slot 13 numbered 18 (for ease of description, the slot opening layer 141 is numbered a, the slot bottom layer 142 is numbered f, and layers from the slot opening layer 141 to the slot bottom layer 142 are sequentially numbered from a to f).

Wire slots 131 that the U-shaped wires 23 in the branch 22 sequentially pass through are wire slots 131 numbered 9f to 16f, 25e to 34d, 43c to 52b, 61a to 72a, 63b to 54c, 45d to 36e, 27f to 34f, 43e to 52d, 61c to 70b, 7a to 17a, 8b to 71c, 62d to 53e, 44f to 35f, 44e to 53d, 62c to 71b, 8a to 18a, 9b to 72c, 63d to 54e, 45f to 52f, 61e to 70d, 7c to 16b, 25a to 36a, 27b to 18c, 9d to 72e, 63f to 70f, 7e to 16d, 25c to 34b, 43a to 53a, 44b to 35c, 26d to 17e, 8f to 71d, 8e to 17d, 26c to 35b, 44a to 54a, 45b to 36c, and 27d to 18e.

It can be learned that, for the first branch 22a and the second branch 22b of the W-phase winding 21c, in the U-shaped wire 23 used between the two branches 22, both the first branch 22a and the second branch 22b may use the U-shaped wire 23 shown in FIG. 16, FIG. 17, and FIG. 20. The U-shaped wires 23 shown in FIG. 18, FIG. 19, and FIG. 21 are only used by the first branch 22a, and the U-shaped wires 23 shown in FIG. 22, FIG. 23, and FIG. 24 are only used by the second branch 22b.

It will be understood that nine types of U-shaped wires shown in FIG. 16 to FIG. 24 cooperate with each other, so that the first branch 22a and the second branch 22b implement wire winding of the stator slot 13 of the W-phase winding 21c, thereby ensuring a copper fill factor of the stator slot 13 corresponding to the W-phase winding 21c. In addition, mutual cooperation between the nine types of U-shaped wires 23 and the first branch 22a and the second branch 22b avoids formation of circulation interference between the two branches 22, thereby improving operational reliability of the motor stator 100 in the present disclosure.

In an embodiment, as shown in FIG. 10 to FIG. 13, for the first branches 22a of the U-phase winding 21a and the V-phase winding 21b, a wire winding configuration of the stator slots 13 numbered 1 to 3 of the U-phase winding 21a is the same as a wire winding configuration of the stator slots 13 numbered 49 to 51 of the V-phase winding 21b. Correspondingly, remaining stator slot groups 14b of the V-phase winding 21b also have one stator slot group 14b with the same wire winding configuration as the U-phase winding 21a. In addition, second branches 22b of the U-phase winding 21a and the V-phase winding 21b also have the foregoing features.

On the basis that a span between stator slots 13 that are located in the same phase band 15 between the stator slots 13 numbered 1 to 3 and the stator slots 13 numbered 49 to 51 is 24, it will be understood that the U-phase winding 21a and the V-phase winding 21b have the same wire winding condition, with a circumferential spacing of 120°.

In addition, as shown in FIG. 14 and FIG. 15, for the W-phase winding 21c, the W-phase winding 21c also has the same wire winding configuration as the U-phase winding 21a and the V-phase winding 21b. Correspondingly, angle spacings between the U-phase winding 21a, the V-phase winding 21b, and the W-phase winding 21c are all 120°, so that the phase windings 21 are symmetrical to each other to ensure operation of the motor stator 100 in the present disclosure.

In an embodiment, as shown in FIG. 10 and FIG. 11, a wire inlet end 221 and a wire outlet end 222 of the same branch 22 are located in two adjacent stator slot groups 14b of the branch 22. As shown in FIG. 10, a wire inlet end 221 of the first branch 22a is located in a stator slot 13 numbered 1f, and a wire outlet end 222 of the first branch 22a is located in a stator slot 13 numbered 10e. As shown in FIG. 11, a wire inlet end 221 of the second branch 22b is located in a stator slot 13 numbered 3f, and a wire outlet end 222 of the second branch 22b is located in a stator slot 13 numbered 12e.

It will be understood that a span between two stator slots 13 corresponding to a wire inlet end 221 and a wire outlet end 222 of the same branch 22 is a full pitch. Therefore, a wire winding direction of each branch 22 forms a cycle, so as to ensure wire winding quality of the branch 22.

In an embodiment, referring back to FIG. 2, a wire inlet end 221 and a wire outlet end 222 of each branch 22 of each phase winding 21 are located on the same side of the stator core 10, which reduces wire outlet difficulty of the phase windings 21 and simplifies an electrical connection configuration between the phase windings 21.

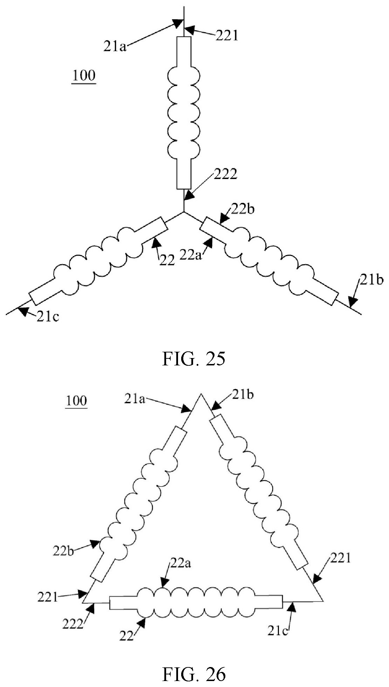

Reference is made to a schematic diagram of a connection of a three phase winding 20 according to an embodiment of the present disclosure shown in FIG. 25.

As shown in FIG. 25, each phase winding 21 includes a first branch 22a and a second branch 22b, wire inlet ends 221 of the first branch 22a and the second branch 22b of each phase winding 21 are electrically connected, and wire outlet ends 222 of the first branch 22a and the second branch 22b of each phase winding 21 are electrically connected, so as to implement parallel connection between two branches 22 of a same-phase winding 21.

As shown in FIG. 25, wire outlet ends 222 of the U-phase winding 21a, the V-phase winding 21b, and the W-phase winding 21c are electrically connected to each other, so that the motor stator 100 in the present disclosure uses a star connection configuration. Because a starting current of a star connection is relatively small, it will be understood that the motor stator 100 in the present disclosure uses the star connection configuration, which can improve a starting speed of the motor 200 in the present disclosure.

It will be understood that, in another embodiment, as shown in FIG. 26, a wire inlet end 221 of the U-phase winding 21a is electrically connected to a wire outlet end 222 of the V-phase winding 21b, a wire inlet end 221 of the V-phase winding 21b is electrically connected to a wire outlet end 222 of the W-phase winding 21c, and a wire inlet end 221 of the W-phase winding 21c is electrically connected to a wire outlet end 222 of the U-phase winding 21a, so that the motor stator 100 in the present disclosure uses a delta connection configuration, thereby improving operating power of the motor 200 in the present disclosure.

It will be understood that the terms such as "first" and "second" are used for a descriptive purpose only and shall not be construed as indicating or implying relative importance or implicitly indicating the quantity of the indicated technical features. Therefore, features defined with "first" and "second" may explicitly or implicitly include one or more of the features. In the descriptions of the implementations of the present disclosure, "a plurality of" means two or more, unless otherwise explicitly defined.

In the description of this specification, description of reference terms such as "an implementation", "some implementations", "illustrative implementation", "example", "a specific example", or "some examples" mean that specific features, structures, materials, or characteristics described with reference to the implementations or examples are included in at least one implementation or example of the present disclosure. In this specification, illustrative expressions of the foregoing terms do not necessarily refer to the same implementation or example. In addition, specific features, structures, materials, or characteristics described may be combined in an appropriate manner in any one or more implementations or examples.

It will be understood that the application of the present disclosure is not limited to the foregoing examples. A person of ordinary skill in the art may make improvements or changes according to the foregoing description, and all the improvements and changes shall fall within the protection scope of the claims appended to the present disclosure. A person of ordinary skill in the art may understand that all or some of procedures for implementing the foregoing embodiments and equivalent modifications made according to the claims of the present invention shall fall within the scope of the present invention.

## Claims

1. A motor stator (100), comprising:
a stator core (10), the stator core (10) being cylindrical, and the stator core (10) comprising:
an inner wall (11), a plurality of stator slots (13) being distributed in a circumferential direction of the inner wall (11), every three adjacent stator slots (13) forming one stator slot group (14b), one stator slot (13) corresponding to one stator slot group (14b), a plurality of wire slots (131) being arranged in each stator slot (13) in a radial direction of the stator core (10), and wire slots (131) with the same radius dimension in each stator slot (13) being disposed in the same wire slot layer (14a); and
three phase windings (20), the three phase windings (20) being sequentially and alternately wound in different stator slot groups (14b) in a circumferential direction of the stator core (10), the three phase windings (20) being further sequentially wound in wire slot layers (14a), each phase winding (21) of the three phase windings (20) comprising two branches (22), each branch (22) being wound in stator slots (13) of a plurality of stator slot groups (14b) spaced apart from each other, and the same branch (22) in two stator slot groups (14b) that are centrally symmetrical having the same winding configuration.

2. The motor stator (100) according to claim 1, wherein the two branches (22) each have a wire inlet end (221), the wire inlet ends (221) of the two branches (22) are located in two spaced stator slots (13) of the same stator slot group (14b) and are located on the same wire slot layer (14a), wherein the wire inlet ends (221) of the two branches (22) are spaced apart by one stator slot (13); and/or
the two branches (22) each have a wire outlet end (222), and the wire outlet ends (222) of the two branches (22) are both located in two spaced stator slots (13) of another stator slot group (14b) and are located in the same wire slot layer (14a), wherein the wire outlet ends (222) of the two branches (22) are spaced apart by one stator slot (13).

3. The motor stator (100) according to claim 2, wherein a wire inlet end (221) and a wire outlet end (222) of each branch (22) are located on two adjacent wire slot layers (14a), and a radius dimension of the wire slot layer (14a) in which the wire inlet end (221) of the branch (22) is located is greater than a radius dimension of the wire slot layer (14a) in which the wire outlet end (222) of the branch (22) is located.

4. The motor stator (100) according to claim 2, wherein the branch (22) comprises:
a plurality of U-shaped wires (23) sequentially connected in series, each U-shaped wire (23) comprising a bent end (231), a welded end (24) being formed between two adjacent U-shaped wires (23), and the bent end (231) and the welded end (24) alternately spanning between stator slot groups (14b) and alternately spanning between wire slot layers (14a), wherein
a span of the bent end (231) spanning between two adjacent wire slot layers (14a) is a full pitch; and a span of the welded end (24) spanning between two adjacent wire slot layers (14a) is a full pitch.

5. The motor stator (100) according to claim 4, wherein a wire inlet end (221) and a wire outlet end (222) of the same branch (22) are located in two adjacent stator slot groups (14b), and a span between two stator slots (13) corresponding to the wire inlet end (221) and the wire outlet end (222) of the branch (22) is a full pitch.

6. The motor stator (100) according to claim 4, wherein the wire slot layer (14a) comprises:
a slot bottom layer (142), a radius dimension of the slot bottom layer (142) being greater than a radius dimension of any other wire slot layer (14a); and
a slot opening layer (141), a radius dimension of the slot opening layer (141) being less than a radius dimension of any other wire slot layer (14a), wherein
the two branches (22) of a same-phase winding (21) comprise a first branch (22a) and a second branch (22b), a span of the first branch (22a) at the bent end (231) of the slot bottom layer (142) is n and n+2, and a span of the first branch (22a) at the bent end (231) of the slot opening layer (141) is n-2 and n-1; and a span of the second branch (22b) at the bent end (231) of the slot bottom layer (142) is n-2 and n, and a span of the second branch (22b) at the bent end (231) of the slot opening layer (141) is n+1 and n+2, wherein the full pitch is n.

7. The motor stator (100) according to claim 6, wherein a wire inlet end (221) of each branch (22) is located on the slot bottom layer (142), and a wire outlet end (222) of each branch (22) is located on the wire slot layer (14a) adjacent to the slot bottom layer (142).

8. The motor stator (100) according to any one of claims 1 to 7, wherein a wire inlet end (221) and a wire outlet end (222) of each branch (22) of each phase winding (21) are located on the same side of the stator core (10), so as to implement electrical connection between phase windings (21).

9. The motor stator (100) according to claim 8, wherein wire inlet ends (221) of two branches (22) of a same-phase winding (21) are electrically connected, and wire outlet ends (222) of branches (22) of the three phase windings (21) are electrically connected to each other.

10. The motor stator (100) according to claim 8, wherein wire inlet ends (221) of two branches (22) of a same-phase winding (21) are electrically connected to wire outlet ends (222) of two branches (22) of another phase winding (21) after being electrically connected to each other.

11. A motor (200), comprising:
a motor rotor (201); and
the motor stator (100) according to any one of claims 1 to 10, wherein
the motor rotor (201) is located on an inner side of the motor stator (100).

12. A drive assembly (300), comprising:
a speed reducer (301); and
the motor (200) according to claim 11, the motor (200) being in transmission connection with the speed reducer (301).

13. A vehicle (400), comprising:
a wheel (401); and
the drive assembly (300) according to claim 12, the motor (200) of the drive assembly (300) being in transmission connection with the wheel (401) through the speed reducer (301) of the drive assembly (300) for driving the wheel (401) to rotate to control operation of the vehicle (400).
